# EUROPEAN PATENT APPLICATION

(11) **EP 1 643 296 A1**
(43) Date of publication of application: **05.04.2006**
(21) Application number: 05021266.1
(22) Date of filing: 29.09.2005
(51) Int. Cl.: G02F 1/13, H04M 1/02

(54) **Liquid crystal display device**

(30) Priority: 30.09.2004 JP 2004286354
(71) Applicant: SANYO ELECTRIC CO., LTD., Moriguchi-shi, Osaka (JP); Tottori Sanyo Electric Co., Ltd., Tottori-shi, Tottori (JP)
(72) Inventor: Hayano, Satoshi, c/o Tottori Sanyo Elec. Co., Ltd., Tottori-shi Tottori (JP); Kishi, Hideaki, c/o Tottori Sanyo Elec. Co., Ltd., Tottori-shi Tottori (JP)
(74) Representative: HOFFMANN EITLE

(57) **Abstract**

A liquid crystal display device (10) having a stacked body where a first liquid crystal display panel (15) is disposed on one side of a light guiding plate (11) that leads out light to both of the front and rear sides thereof, a smaller second liquid crystal display panel (30) is disposed on the other side of the light guiding plate (11), and the panels and the light guiding plate are stacked, and the side in which the second liquid crystal display panel (30) is installed is covered by a metallic main body cover (40) having a flat surface that supports the display surface (30b) of the second liquid crystal display panel (30) at substantially the same level, and the main body cover (40) covers a circuit board (18) arranged around the second liquid crystal display panel (30), and is provided with an opening (42) to expose the display surface (30b) of the second liquid crystal display panel (30). Consequently, the crystal display device, easily housed in various devices, is provided.

## Description

### Field of the Invention

The present invention relates to a liquid crystal display device that is easily housed in various devices such as a mobile phone.

### Background Art

In recent years, mobile phones, PDAs or mobile-type information terminals that function as telephones and are capable of displaying more messages than ever have been commercially produced on a wider scale. Among these devices, mobile phones in particular are now capable of connecting to the Internet and even include various functions such as e-mail, information search, and navigation by displaying maps and guiding the user to certain destinations. In the future, more types of software are even expected to be installed in the devices and as such they have become indispensable to everyday life.

Since the installation of such various types of software has become possible, there has been a continuing demand for lighter, portable and more convenient to use mobile phones, such that different kinds of mobile phones have been developed and commercially produced.

Such kind of mobile phones are roughly divided into two: the bar type and the folding type. The folding type, in which liquid crystal display panels are installed on both (the front and rear) sides of the mobile phone to enable caller identification or display time or the like, even when the phone is closed, have recently become widespread.

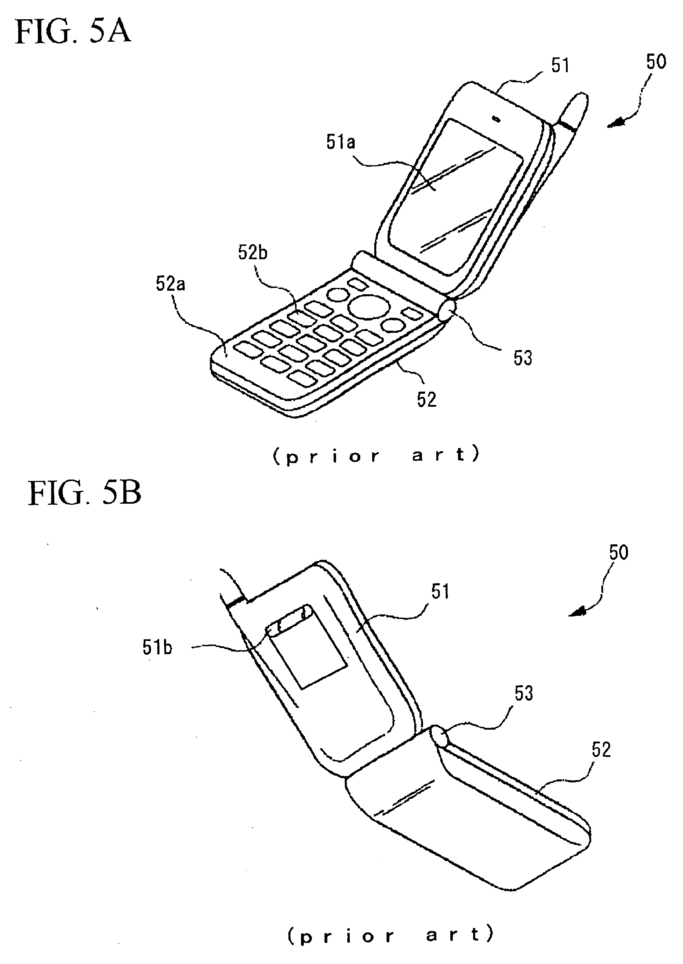

Fig. 5 shows a conventional folding type of mobile phone, where Fig. 5A is a perspective view of the phone viewed from one direction when it is open or in use, and Fig. 5B is a perspective view of the phone viewed from another direction.

As shown in Figs. 5A and 5B, the folding type mobile phone 50 generally comprises an upper housing 51 and a lower housing 52 connected together by a hinge mechanism 53 in a freely openable and closable manner, whereby a double-side emission type liquid crystal display panel is provided for the upper housing 51, and an operation panel 52a of the lower housing 52 is provided with an input keyboard 52b for performing dial operation or the like.

The double-side emission type liquid crystal display panel is made up of a main liquid crystal display panel 51a whose main display surface is exposed to an operation face and an auxiliary liquid crystal display panel 51b is exposed to an exterior face.

The double-side emission type liquid crystal display panel consists of a main liquid crystal display panel 51a whose main display surface serves as the main operation face of the mobile phone and an auxiliary liquid crystal display panel 51b disposed on the exterior surface of the upper housing 51 of the mobile phone 50.

According to the mobile phone 50 with such an installed liquid crystal display panel, the auxiliary liquid crystal display panel 51b is located on the exterior surface of the upper housing 51 even when both housings 51, 52 are folded by the hinge mechanism 53, so that various information can be viewed from the auxiliary display surface without opening both housings 51, 52.

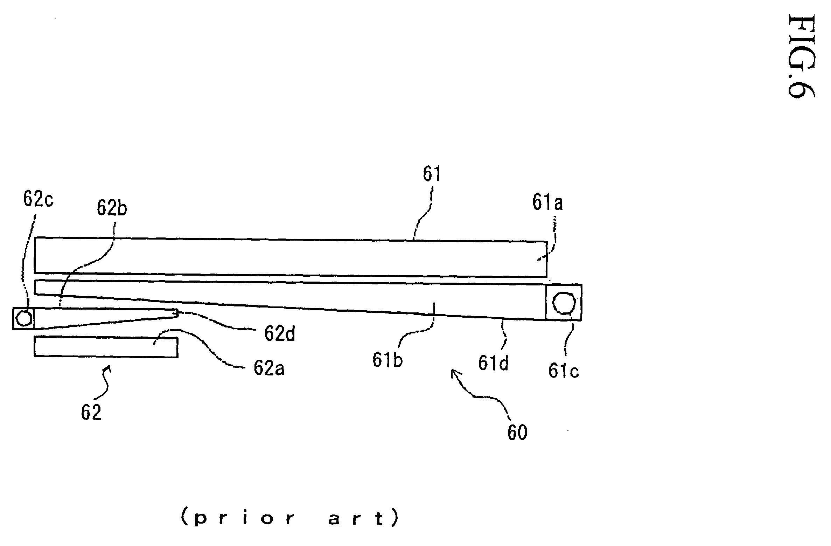

Fig. 6 is a side view schematically showing a publicly known liquid crystal display panel used in this type of folding mobile phone.

The liquid crystal display panel 60 includes a main liquid crystal display panel 61 functioning as the main display surface and an auxiliary liquid crystal display panel 62 acting as the auxiliary display surface, where the main liquid crystal display panel 61 consists of a semi-transmissive liquid crystal display panel 61a and a main backlight 61b irradiating the liquid crystal display panel 61a, with the main backlight 61b comprising a light source 61c and a light guiding plate 61d.

Further, the auxiliary liquid crystal display panel 62 includes a smaller semi-transmissive liquid crystal display panel 62a compared to the main liquid crystal display panel 61 and an auxiliary backlight 62b irradiating the liquid crystal display panel 62a, with the auxiliary backlight 62b being made up of a light source 62c and a light guiding plate 62d.

However, since the liquid crystal display panel 60 requires the main backlight 61b and the auxiliary backlight 62b for the main and auxiliary liquid crystal display panels 61, 62 respectively, the light sources 61c, 62c are in turn necessary for each backlight, resulting in a larger mobile phone with a greater number of parts. To address such problems, a double-sided liquid crystal display device capable of irradiating two liquid crystal display panels by only one backlight unit has been introduced in Japanese Laid-Open Patent Publication No. 2002-287144 publication (Fig. 4, columns [0025] to [0030]), for example.

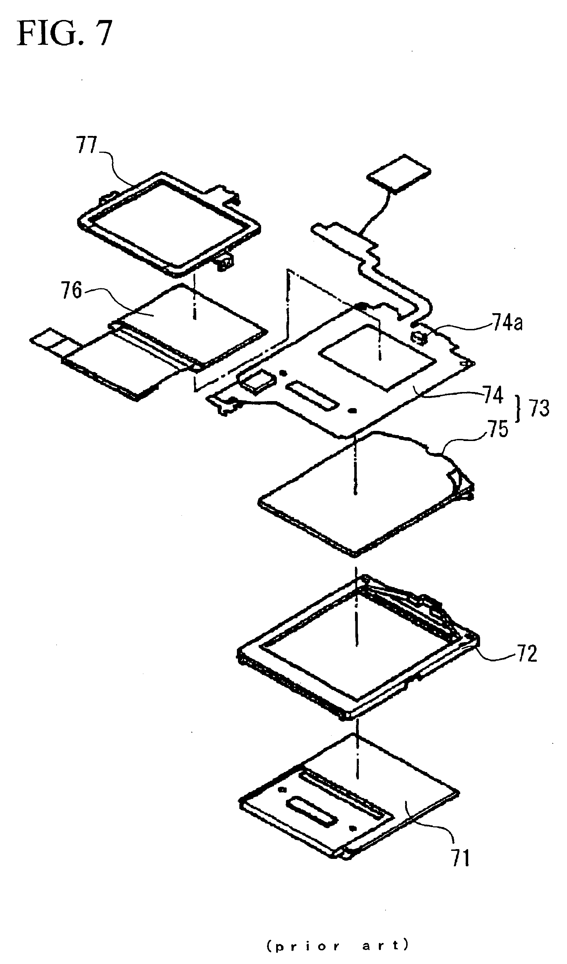

Fig. 7 is an exploded perspective view of the double-sided liquid crystal display device described in the abovementioned patent document, where the double-sided liquid crystal display device includes an inner liquid crystal display panel 71 functioning as the main liquid crystal display panel, a holder 72 for housing the main liquid crystal display panel 71, a backlight unit 73 and an outer liquid crystal display panel 76, that is, the auxiliary liquid crystal display panel earlier referred to, where the backlight unit 73 consists of a light guiding plate 75 and a flexible board 74.

The backlight unit 73 of the aforesaid double-sided liquid crystal display device is assembled in the following manner. Firstly, the light guiding plate 75 is inserted into the inner portion of the holder 72, and the liquid crystal display panel 71 is attached to the bottom surface of the light guiding plate 75, atop which the flexible board 74 is disposed. The outer liquid crystal display panel 76 is then affixed to the holder 72 by a frame body 77 on top of the flexible board 74. Furthermore; an emission source LED 74a is formed on one side of the flexible board 74.

### Disclosure of the Invention

Each of the above-described liquid crystal display devices includes main and auxiliary liquid crystal display panels, where the auxiliary liquid crystal panels 62 and 76 are smaller than the main liquid crystal display panels 61, 71, and the auxiliary liquid crystal display panels are stacked to the main liquid crystal display panel while sandwiching the light guiding plate therebetween.

For this reason, the auxiliary liquid crystal display panel protrudes from the light guiding plate, and the surface on which the auxiliary liquid crystal display panel is installed becomes uneven in shape. Further, the liquid crystal display panel is connected to a circuit board 78 controlling the display panel, while the circuit board is mounted on the light guiding plate side and exposed.

The housing of such a liquid crystal display device installed in various gadgets, i.e., mobile phones is such that a gap is formed in a suitable housing chamber designed to accommodate the shape of the main liquid crystal display panel when housing for the auxiliary liquid crystal display panel is provided because the two liquid crystal display panels differ in shape, and failure of operation ensues when the auxiliary liquid crystal display panel is affected by vibration or the like. Therefore, the display housing must be such to fit the external shape of the auxiliary liquid crystal display panel, giving rise to the need for creating a mold therefor, or complicate processing work is required.

Further, the periphery of each liquid crystal display panel is fixed by the frame body having a picture frame shape. Thus, because a fixing body is required for each liquid crystal display panel, thereby increasing the number of parts and making the liquid crystal display panel even thicker due to the thickness of the fixing body portion..

Further, since the circuit board is mounted on the light guiding plate side and exposed, dust or the like easily penetrate or settle upon the circuit devices or circuit patterns installed on the circuit board, and the board becomes increasingly exposed to the danger of breakage if it collides with an obstacle. Furthermore, since the circuit devices and the wiring patterns are exposed, they are then prone to generate electromagnetic waves, adversely affecting the peripheral areas, while the board is easily exposed to the incidence of electromagnetic waves from the outside, or the like.

The present invention has thus been created to solve the aforementioned problems existing in the prior art, and it is the object of the present invention to provide a liquid crystal display device that can be easily housed in various forms of gadgets and devices.

### SUMMARY OF THE INVENTION

To achieve the above-mentioned objective, Claim 1 of the present invention proposes a liquid crystal display device having a stacked body where a first liquid crystal display panel is disposed on one side of a light guiding plate that leads out light severally to both of the front and rear sides thereof, a smaller second liquid crystal display panel is disposed on the other side of the light guiding plate, and the panels and the light guiding plate are stacked, in which the side on which the second liquid crystal display panel is installed is covered by a metallic cover having a flat surface that supports the display surface of the second liquid crystal display panel at substantially the same level, and covers a circuit board arranged around the second liquid crystal display panel, and the cover is provided with an opening to expose the display surface of the second liquid crystal display panel.

Further, Claim 2 of the invention refers to the liquid crystal display device according to Claim 1, in which a reinforcing frame comprising a thin plate, which is substantially of the same size as the light guiding plate, and is provided with an opening large enough to accommodate the display surface of the second liquid crystal display panel.

Further, Claim 3 of the invention refers to the liquid crystal display device according to Claim 1, wherein the periphery of the first liquid crystal display panel and the light guiding plate is framed by a picture frame-shaped body, and the metallic cover is fixed by the frame body.

Further, Claim 4 of the invention refers to the liquid crystal display device according to any one of Claims 1 to 3, wherein a circuit board, upon which a control device for driving liquid crystal and connectors for external connection are mounted and is provided with an opening to accommodate the display surface of second liquid crystal display panel and the cover.

Further, Claim 5 of the invention refers to the liquid crystal display device according to Claim 4, wherein openings are formed on the cover for exposing the connectors which are installed on the circuit board for external connection.

### Effects of the Invention

The liquid crystal display device having the above-described constitution can produce the effects explained below.

Specifically, according to the liquid crystal display device of Claim 1 of this application, the stacked body consisting of the first liquid crystal display panel, the light guiding plate and the second liquid crystal display panel is covered by the metal cover on the other side of the second liquid crystal display panel, where in the metal cover supports the display surface of the second liquid crystal display panel at substantially the same level, such that the surface of the second liquid crystal display panel is relatively flat. In this manner, in housing the stacked body in certain devices such as the display housing of a mobile phone, for example, the housing chamber provided for inside the housing thereof need not conform to the shape of the stacked body to fix the liquid crystal display device, thereby facilitating manufacture and assembly of the display housing for the liquid crystal display device.

Further, since the surface on which the second liquid crystal display panel is installed is covered by a metallic cover, emission of electromagnetic waves to the outside or the effect of electromagnetic waves generated by other external devices can be prevented.

Furthermore, when the opening provided in the cover is substantially of the same size as the second liquid crystal display panel, the second liquid crystal display panel can be firmly fixed, thereby reducing the number of parts because an exclusive frame body for fixing the second liquid crystal display panel becomes unnecessary, allowing the thickness of the device to become thinner, while bringing about cost reduction and simplification of assembly work.

Further, since the liquid crystal display device on the side of the second liquid crystal display panel is covered by the cover to have a flat surface, its thickness can be made thinner while rendering it unnecessary to provide for a housing chamber inside the housing conforming to the shape of the stacked body in order to firmly set the liquid crystal display device, thereby facilitating manufacture and assembly of the display housing for the liquid crystal display device.

According to the liquid crystal display device of Claim 2 of this application, the reinforcing frame comprising a thin plate is laid between the light guiding plate and the second liquid crystal display panel to form the stacked body that consists of the first and second liquid crystal display panels and the light guiding plate. Thus, even if the first and second liquid crystal display panels and the light guiding plate constituting the stacked body are made thinner, the reinforcing frame can mechanically reinforce them, thereby permitting the thickness of the light guiding plate and the first and second liquid crystal display panels to become thinner, so that further slimness of the entire liquid crystal display device can be achieved.

According to the liquid crystal display device of Claim 3 of this application, in addition to the effects of Claims 1 and 2, since the periphery of the stacked body constituting the two liquid crystal display panels and the light guiding plate is framed by a picture frame-shaped body, the stacked body is firmly fixed. Further, since the cover is fixed to the frame-shaped body, installation is stabilized.

According to the liquid crystal display device of Claim 4 of this application, since the circuit board is covered by the cover, dust or the like can be prevented from settling on the circuit devices or the circuit patterns. Similarly, the danger of breakage to the liquid crystal display device that may ensue upon collision with an obstacle can also be prevented. Furthermore, the metal cover likewise serves to prevent the emission of electromagnetic waves to the outside or protect the device from the effect of electromagnetic waves generated by external devices.

According to the liquid crystal display device of Claim 5 of this application, connection between the circuit board and external connectors (external power source, for example) is made easier by providing for openings in the cover for the purpose of exposing the connectors for external connection.

### BRIEF DESCRIPTION OF THE DRAWINGS

Fig. 1 is an exploded perspective view showing the liquid crystal display device according to an embodiment of the present invention.
Fig. 2 shows the liquid crystal display device assembly of Fig. 1, where Fig. 2A is a plane view and Fig. 2B is a cross-sectional view taken along IIB-IIB line of Fig. 2A.
Fig. 3 shows the circuit board installed in the liquid crystal display device of the present invention, where Figs. 3A and 3B are front perspective and rear perspective views thereof, respectively.
Fig. 4 shows a sheet metal frame installed in the liquid crystal display device of the present invention, where Figs. 4A and 4B are front perspective and rear perspective views thereof, respectively.
Fig. 5 illustrates a conventional folding type mobile phone, where Fig. 5A is a perspective view of the phone viewed from one direction when it is open or in use, and Fig. 5B is a perspective view of the phone viewed from another direction.
Fig. 6 is a side view schematically showing a publicly-known liquid crystal display panel used in this type of folding mobile phone.
Fig. 7 is an exploded perspective view of a conventional double-sided liquid crystal display device.

### Best Mode for Carrying Out the Invention

Preferred embodiments of the present invention will be described hereafter with reference to the drawings. Note that while the embodiments illustrated below exemplify the liquid crystal display device according to the technical concept of the present invention and a mobile information terminal including such liquid crystal display device, these embodiments are not intended to restrict the application of the present invention to such liquid crystal display device and a mobile information terminal including such liquid crystal display device, since other embodiments within the scope of the claims are equally applicable.

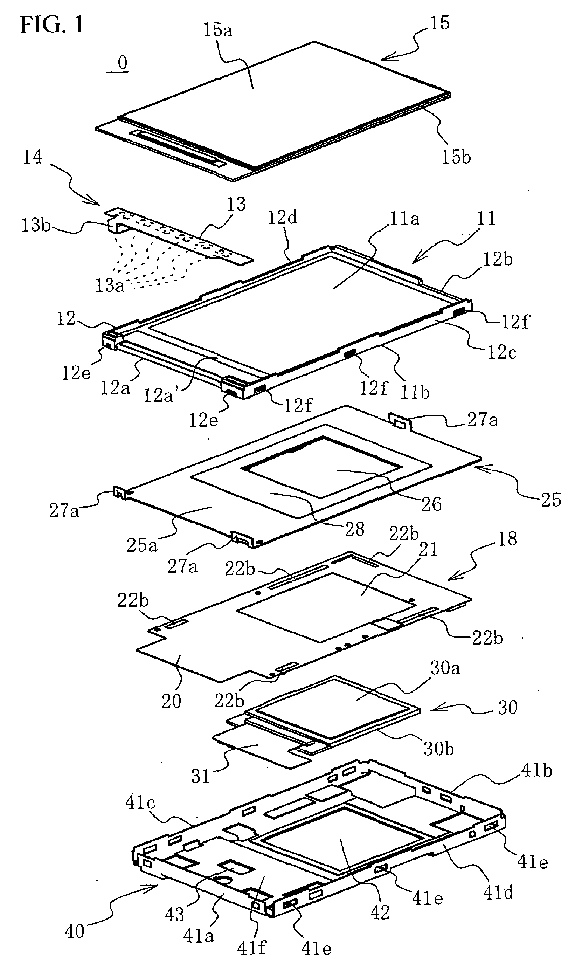

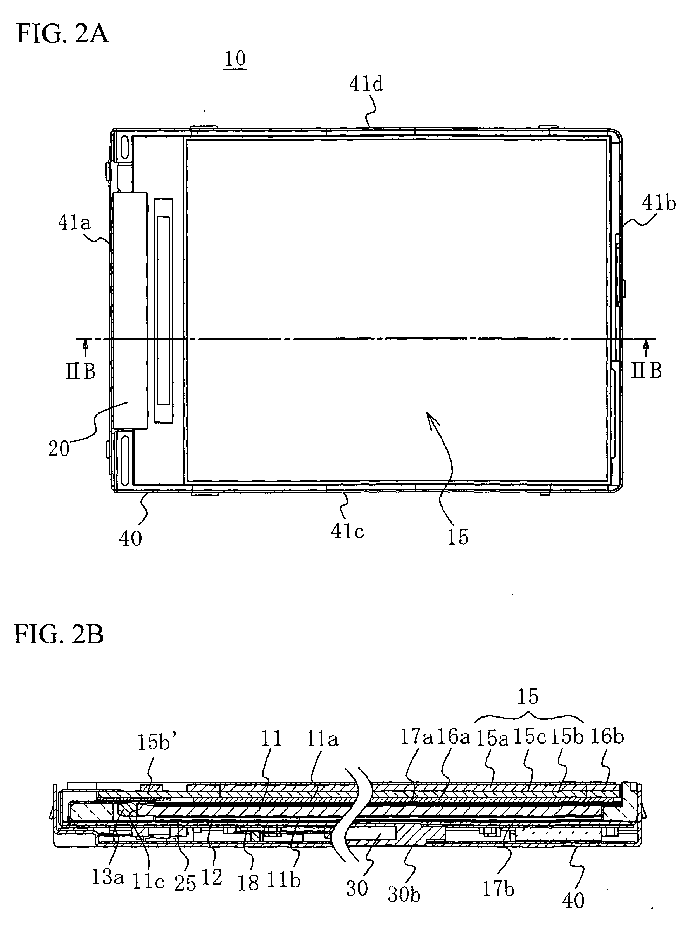

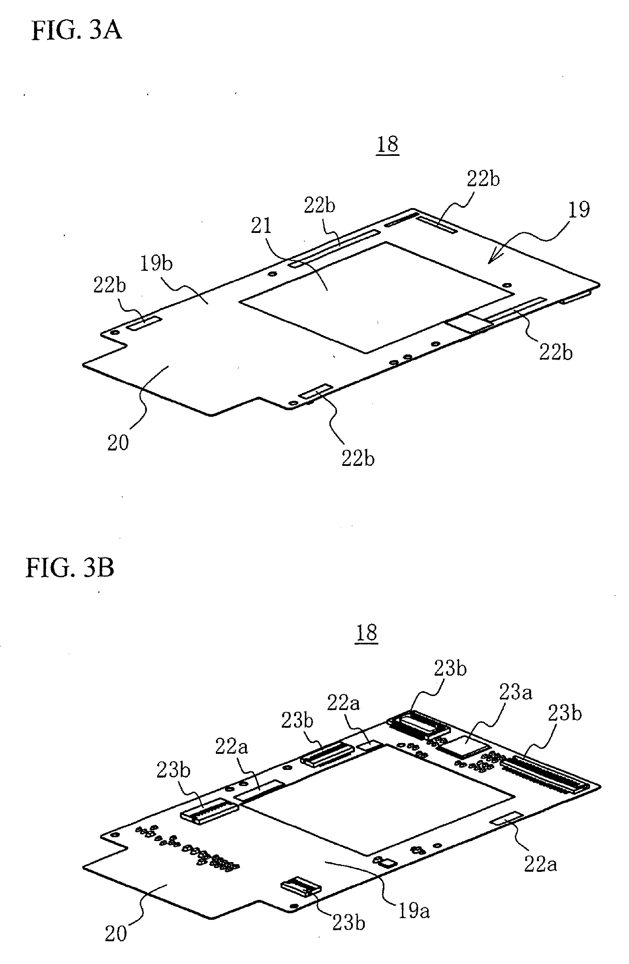

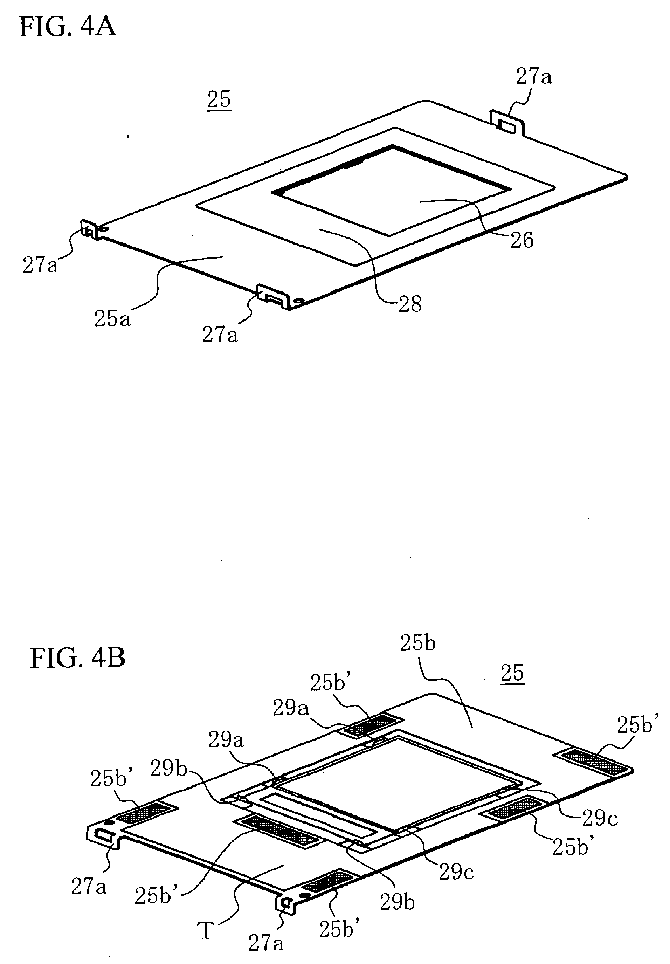

Fig. 1 is an exploded perspective view showing the liquid crystal display device according to an embodiment of the present invention, while Fig. 2 shows the liquid crystal display device assembly of Fig. 1, where Fig. 2A is a plane view and Fig. 2B is a cross-sectional view taken along IIB-IIB line of Fig. 2A, and Fig. 3 shows the circuit board installed in the liquid crystal display device of the present invention, where Figs. 3A and 3B are front perspective and rear perspective views thereof, respectively. Fig. 4 shows a sheet metal frame installed in the liquid crystal display device of the present invention, where Figs. 4A and 4B are front perspective and rear perspective views thereof, respectively. Meanwhile, the explanation hereafter made regarding the front and rear sides of the circuit board and the sheet metal frame shown in Figs. 3 and 4 is based on the assumption that the side where the first liquid crystal display panel is provided is the front face of the mobile phone and the side where the second liquid crystal display panel is provided is the rear face of the mobile phone.

The present invention refers to a liquid crystal display device equipped with a double-side emission type light guiding plate, and in particular, a liquid crystal display device 10 that includes a light guiding plate 11 which leads out light to both of the front and rear faces of the light guiding plate, a first liquid crystal display panel 15 disposed on the front face 11a of the light guiding plate 11, and a smaller second liquid crystal display panel 30 on the rear face 11b of the light guiding plate 11. The device is constituted in such manner that as a metallic cover, a sheet metal frame 25 having a thin plate shape and substantially the same size as that of the light guiding plate 11 has an opening 26 having substantially the same size as that of the display surface of the second liquid crystal display panel 30 which is brought into contact with the rear face 11b of the light guiding plate 11, whereby the first liquid crystal display panel 15, the light guiding plate 11 and the second liquid crystal display panel 30 are stacked, and as a reinforcing frame, a main body cover 40 covers the stacked body constituting the light guiding plate and the panels and affixes it to expose the surface of the second liquid crystal display panel 30 through an opening 42 provided in the main body cover 40.

As shown in Figs. 1 and 2, the light guiding plate 11, made of a thin plate shaped body of transparent material, leads light, which is output from a light source 14, from one end portion 11c to the inner portion of the light guiding plate, and leads the light toward the front face 11a (to the first liquid crystal display panel 15) and the rear face 11b (to the second liquid crystal display panel 30) of the light guiding plate 11. The light guiding plate 11 is then fitted into a picture frame-shaped frame body 12. Acrylic resin material, for example, preferably with a thickness of about 0.6mm, may be used to form the light guiding plate.

The frame body 12, into which the light guiding plate 11 is fitted, is rectangular in shape and consists of frame pieces 12a to 12d having a predetermined width and height, and is large enough to house the first liquid crystal display panel 15, the light guiding plate 11, optical sheets 17a, 17b and the light source 14, as shown in Figs. 1 and 2B.

Among the frame pieces 12a to 12d, the frame pieces 12c, 12d facing each other are extended so as to be longer than the light guiding plate 11, the frame piece 12a being provided in such manner that the tip thereof forms a gap 12a' between the frame piece 12a and the light guiding plate 11 when the light guiding plate 11 is fitted into the frame body 12. The light source 14 is inserted in the gap 12a' when the liquid crystal display panels are assembled.

The first liquid crystal display panel 15, the optical sheets 17a, 17b and the light guiding plate 11 are fitted into the picture frame-shaped frame body 12. One assembly is thus formed by fitting each of these parts into the frame body 12, thereby simplifying assembly of the liquid crystal display panels in the next process. In addition, a specific member for affixing the first liquid crystal display panel 15 is rendered unnecessary, thereby facilitating assembly of the liquid crystal display panels, while making them mechanically stronger and more durable.

In the light source 14, a plurality of LEDs (Light Emitting Diode) 13a is arrayed in line and attached to a strip of board 13, and power is supplied via a wiring 13b connected to the board. Note that description is based on the assumption that the light sources are LEDs, but are not limited to the same, such that a fluorescent lamp or the like, for example, may be used.

A semi-transmissive reflective liquid crystal display panel is used as the first liquid crystal display panel 15. As shown in Fig. 2B, the first liquid crystal display panel 15 is constituted by filling the first and second boards 15a, 15b made of glass facing each other with liquid crystal 15c via a sealing material, thereby joining them together as a unit. The second board 15b which is longer than the first board 15a is set in such manner as to allow the end portion thereof to protrude from the edge of the first board 15a when the two boards are joined. Then, the light source 14 is attached to the rear surface of the protruding portion 15b'. A more detailed description of the semi-transmissive reflective liquid crystal display panel has been omitted because the type of panel used for the invention is already publicly known.

Further, polarizing plates 16a, 16b are severally disposed on the front and .rear faces of the first liquid crystal display panel 15, and the optical sheet 17a consisting of either a light diffusion sheet, a prism sheet or the like is disposed between the first liquid crystal display panel 15 and the light guiding plate 11.

Thereafter, a circuit board 18, which is a flexible printed circuit (FPC) on which a graphic controller, a light source (LED) driver, a semiconductor device for driving liquid crystal, and the like are mounted, is connected to one end of the first liquid crystal display panel 15. As shown in Fig. 3, the circuit board 18 consists of a control board 19 having substantially the same size as that of the first liquid crystal display panel 15, and a connection portion 20 connecting the control board 19 to the first liquid crystal display panel 15. The circuit board 18 can be folded at the connection portion 20 when it is assembled.

The front face 19b of the circuit board 18 [refer to Fig. 3A], that is, the surface contacting the rear face 25b of the sheet metal frame 25 [refer to Fig. 4B], is provided with a plurality of earth contact portions 22b provided near the periphery of the circuit board 18.

Furthermore, on the rear face 19a of the circuit board 18, a semiconductor device 23a for driving liquid crystal and connectors 23b for external circuit connection and the like are attached within the vicinity of the opening 21 of the circuit board, and a plurality of earth contact portions 22a are further provided. The earth contact portions 22a and 22b which are formed by a coating of conductive adhesive agent or by means of conductive adhesive tape are connected to each other on the front face of the board.

A semi-transmissive reflective liquid crystal display panel is also used to form the second liquid crystal display panel 30, which is constituted by inserting or sandwiching a liquid crystal layer between a first board 30a and a second board 30b, both made of glass or the like facing each other and thereafter bonded together by a sealing a material to form a unit. The second board 30b serves as a display surface.

A flexible board 31 is then connected to the liquid crystal display panel 30, while the other end thereof is connected to the circuit board 18 via a connector.

The size of the sheet metal frame 25 is substantially the same as that of the picture frame-shaped frame body 12, and the size of its opening 26 is also substantially the same as that of the display surface of the second liquid crystal display panel 30 on the front face of the sheet metal frame 25. A plurality of hooking pieces 27a is made to reside on the peripheral edge thereof. The sheet metal frame 25 should preferably consist of thin metallic material such as aluminum, and have a thickness of about 0.2 mm.

On one side 25a of the sheet metal frame 25, that is, the side that makes contact with the light guiding plate 11, black tape 28 is applied within the vicinity of the opening 26 for the purpose of preventing the leakage of light.

Further, on the rear face 25b of the sheet metal frame 25, that is, the side on which the second liquid crystal display panel 30 is installed, a plurality of protruding pieces 29a, 29b, 29c jutting from the surface are formed on three sides on the peripheral edge of the opening 26. The protruding pieces 29a, 29b, 29c are made to come in contact with the outer peripheral surface of the second liquid crystal display panel 30 to align the same.

The second liquid crystal display panel 30 and an optical sheet (not shown) provided on the rear face of the second liquid crystal display panel 30 are stably fixed by the protruding pieces 29a, 29b, 29c and the main body cover 40 (described later).

Specifically, the second liquid crystal display panel 30 and the optical sheet provided on the rear face of the second liquid crystal display panel 30 are aligned on the three sides corresponding to the protruding pieces 29a, 29b, 29c covered by the main body cover 40, and set in place by pushing the outer periphery of the second liquid crystal display panel 30 against the periphery of the opening 42 provided in the main body cover 40. In this manner, an exclusive frame body for fixing the panel 30 or the like is rendered unnecessary, thereby simplifying the process of assembly.

As shown in Fig. 4B, a plurality of earth contact portions 25b' are formed on the outer peripheral edges of the rear face 25b of the sheet metal frame 25, and double-faced adhesive tape T is adhered on areas excluding the electrodes 25b' and the opening 26. Each earth contact portion 25b' is formed on the frame by applying a coating of conductive adhesive agent or by affixing conductive adhesive tape thereon.

After attaching double-faced adhesive tape T on the rear face 25b of the sheet metal frame 25 and coating the earth contact portions 25b' with conductive adhesive agent, the circuit board 18 is then attached on one side of the double-faced adhesive tape T and the earth contact portions 22b of the circuit board 18 are adhered by means of the conductive adhesive agent during assembly of the liquid crystal display panel.

Therefore, the circuit board 18 is firmly fixed on the sheet metal frame 25, and the earth contact portions 22b are securely connected.

As described above, by using the sheet metal frame 25 made of metallic material, a predetermined mechanical strength is maintained, as the sheet metal frame 25 is brought into contact with the light guiding plate 11, and they can be retained while being reinforced mechanically.

Since the predetermined mechanical strength of the sheet metal frame 25 can be maintained even when it is made of thin material, the overall liquid crystal display device 10 can effectively be made thinner even with the addition of the sheet metal frame 25 and by making the thickness of the light guiding plate and the first and second liquid crystal display panels even thinner. In addition, the sheet metal frame 25 is capable of smoothing out the creases of the optical sheet as well as preventing the occurrence of creases by bringing the sheet metal frame 25 into contact with the optical sheet that is laid between the frame 25 and the light guiding plate 11. Moreover, because the sheet metal frame 25 is formed of conductive material, good electrical circuit connection can be established between the circuit board 18 and the main body cover 40 (described later) and earth connection can thus be formed through such circuit connection.

Note that material for the sheet metal frame 25 is not limited to metallic material as it may comprise a sheet material made of resin or the like having a predetermined strength.

As shown in Figs. 1 and 2, the main body cover 40 serves as a cover for the stacked body formed by stacking the second liquid crystal display panel 30, the sheet metal frame 25, the light guiding plate 11, the first liquid crystal display panel 15, and the like. The main body cover 40 is made of metallic material in the shape of a shallow box having low-height side plates 41a to 41d lying on its outer periphery, has an opening 42 large enough to expose the display surface of the second liquid crystal display panel 30 and a plurality of openings 43 for exposing the connectors 23b which are provided on the circuit board 18 for external connection on flat bottom plates 41f, 41g having the same height.

On the bottom plates 41f, 41g, it is preferable to form jutting portions 44 (not shown) by making the areas contacting the earth contact portions 22a of the circuit board 18 protrude inwardly to improve contact with the earth contact portions 22a during assembly.

Further, when the protruding portions 44 are set at a predetermined height and the main body cover 40 is attached to the stacked body, an outer surface cover, that is, the surface opposite to the surface on which the protruding portions 44 are provided is set at the same height as that of the display surface 30b of the second liquid crystal display panel 30 so as to bring the display surface 30b of the second liquid crystal display panel 30 and the outer surface of the main body cover 40 onto a unified flat surface. Further, the height of the resulting flat surface may be adjusted by the installing positions of the side plates 41a to 41d.

Furthermore, the connectors 23b on the circuit board 18 are exposed through the openings 43 that are provided in plural numbers on the bottom plates 41f, 41g. Note that although material for the main body cover 40 should preferably be metallic, such as stainless steel, another type of metallic material may be used.

The assembly of a liquid crystal display device including a double-side emission type light guiding plate will be described hereafter.

Firstly, the light guiding plate 11 is fitted into the picture frame-shaped frame body 12 and one or a plurality of optical sheets 17a is mounted on one side 11a of the fitted light guiding plate 11, and the first liquid crystal display panel 15 is fitted into the frame body 12 from above the optical sheet 17a. Further, one or a plurality of the optical sheets 17b is also mounted on the other side 11b of the light guiding plate 11 in similar fashion, and a light-shielding sheet (not shown) having an opening to expose the display surface of the second liquid crystal display panel 30 is attached to the optical sheet 17b.

The light-shielding sheet intercepts light coming from the light guiding plate 11 to be irradiated to the outer periphery of the small second liquid crystal display panel 30. Further, by fitting the first liquid crystal display panel 15, the optical sheets 17a, 17b and the light guiding plate 11 into the picture frame-shaped frame body 12, these parts are housed into the frame body 12 to form one assembly, thereby simplifying the process of assembly of the liquid crystal display panel in the next stage. Additionally, because a member for stably fixing the first liquid crystal display panel is rendered unnecessary, assembly of the liquid crystal display panel is further simplified, while enhancing its mechanical strength.

Subsequently, the sheet metal frame 25 is brought into contact with the rear face of the light-shielding sheet of the assembly, and the frame is fixed by engaging the hooking pieces 27a of the sheet metal frame 25 with the hooking protrusions 12e of the frame body 12.

Further, the double-faced adhesive tape T is attached on the sheet metal frame 25 while a coating of conductive adhesive agent is applied to the earth contact portions 25b' in advance, and the second liquid crystal display panel is inserted and sandwiched between the protruding pieces 29a to 29c within the vicinity of the opening 26.

Then, the circuit board 18 is attached on one side of the double-faced adhesive tape T and the earth contact portions 22b of the circuit board 18 are electrically connected to the earth contact portions 25b' of the sheet metal frame 25 via the conductive adhesive agent.

The liquid crystal display panel assembled in this manner is covered by the main body cover 40 from the direction of second liquid crystal display panel 30, the hooking holes 41e of the main body cover 40 being hooked to the hooking protrusions 12f of the frame body 12 to assemble the liquid crystal display device 10 including the double-side emission type light guiding plate. While covering the assembly with the main body cover 40 in the manner described above, the connectors 23b of the circuit board 18 are exposed through the openings provided on the main body cover 40, and connection to other units is achieved via the connectors 23b. Further, the earth contact portions 22a of the circuit board 18 are electrically connected to the inner wall surface of the main body cover 40.

Under this method of assembly, since the earth contact portions 22a, 22b of the circuit board 18 are electrically connected to the earth contact portions 25b' of the sheet metal frame 25 and the main body cover 40, control of noise occurrence becomes possible. In addition, since the first and second liquid crystal display panels 15, 30 and the circuit board 18 are covered by the main body cover 40, the entire assembly is shielded to minimize the effect of electromagnetic waves.

The liquid crystal display device that has been assembled in this manner can be installed in the mobile phone illustrated in Fig. 5. Since both of the display surfaces of the liquid crystal display device 10 of the present invention are formed flat as indicated in the above-described constitution, the housing chamber provided for inside the housing of the liquid crystal display device (represented by the upper housing 51 in Fig. 5) of the mobile phone need not conform to the shape of the stacked body to fix the liquid crystal display device, thereby facilitating manufacture and assembly of the display housing for the liquid crystal display device. Note however that the liquid crystal display device 10 may be installed not only into mobile phones but may also be applied to other mobile information terminals such as PDAs.

## Claims

1. A liquid crystal display device having a stacked body where a first liquid crystal display panel is disposed on one side of a light guiding plate that leads out light severally to both of the front and rear sides of the light guiding plate, a smaller second liquid crystal display panel is disposed on the other side of the light guiding plate, and the panels and the light guiding plate are stacked,
wherein the side in which the said second liquid crystal display panel is installed is covered by a metallic cover having a flat surface that supports the display surface of the second liquid crystal display panel at substantially the same level, and the metallic cover covers a circuit board arranged around the said second liquid crystal display panel, and is provided with an opening to expose the display surface of the second liquid crystal display panel.

2. The liquid crystal display device according to Claim 1, wherein a reinforcing frame comprising a thin plate, which is substantially of the same size as the light guiding plate, is provided with an opening large enough to accommodate the display surface of the second liquid crystal display panel.

3. The liquid crystal display device according to Claim 1, wherein the periphery of the first liquid crystal display panel and the light guiding plate is framed by a picture frame-shaped body, and the said metallic cover is fixed by the said frame body

4. The liquid crystal display device according to any one of Claims 1 to 3, wherein a circuit board, upon which a control device for driving liquid crystal and connectors for external connection are mounted, is provided with an opening to accommodate the display surface of the second liquid crystal display panel and the said cover.

5. The liquid crystal display device according to Claim 4, wherein openings are formed on the cover for exposing the connectors which are installed on the circuit board for external connection.
